# EUROPÄISCHE PATENTSCHRIFT

(11) **EP 0 753 729 B1**
(45) Veröffentlichungstag und Bekanntmachung des Hinweises auf die Patenterteilung: **26.02.2003**
(21) Anmeldenummer: 96110711.7
(22) Anmeldetag: 03.07.1996
(51) Int. Cl.: G01M 3/28, G01M 3/22

(54) **Verfahren und Vorrichtung zur Überwachung einer Rohrleitung**
Procedure and apparatus for monitoring a pipeline
Procédé et appareil de surveillance d'une conduite

(30) Priorität: 11.07.1995 DE 19525176
(43) Veröffentlichungstag der Anmeldung: 15.01.1997
(73) Patentinhaber: BRUGG Rohrsysteme GmbH, D-31515 Wunstorf (DE)
(72) Erfinder: Führmann, Siegfried, 31515 Wunstorf (DE)

(56) Entgegenhaltungen:
- DE-A- 2 164 814
- DE-A- 2 854 509
- US-A- 4 450 711
- US-A- 5 301 538

## Beschreibung

Die Erfindung betrifft ein Verfahren zur Überwachung eines aus mehreren Rohrleitungen bestehenden Leitungsnetzes zum Transport petrochemischer Flüssigkeiten oder Gase nach dem Oberbegriff des Anspruchs 1 sowie eine Vorrichtung nach dem Oberbegriff des Anspruchs 5.

Für den Transport von umweltgefährdenden Medien ist ein Leitungsrohr bekanntgeworden, welches aus zwei konzentrisch zueinander angeordneten gewellten Metallrohren besteht und bei dem der Spalt zwischen den Rohren druck- oder vakuumüberwacht ist. (DE-C-21 64 814)

Obwohl dieses Leitungsrohr einen unbemerkten Schadensfall mit höchster Wahrscheinlichkeit ausschließt, wird dort, wo gesetzliche Vorschriften fehlen, aus Kostengründen ein abgemagertes Leitungsrohr eingesetzt. Ein solches unter dem Handelsnamen "Flexwell-Saugleitung" erhältliches Leitungsrohr besteht aus einem gewellten Metallrohr, auf welchem ein extrudierter Kunststoffmantel aufsitzt. Auch bei diesem Leitungsrohr handelt es sich um ein zweischichtiges Rohr (Metallwellrohr-Kunststoffrohr), aber eine Überwachung ist hier nicht vorgesehen.

Bei dem überwachten Leitungsrohr ist in der Regel der Überwachungsdruck höher als der maximale Förderdruck des Mediums. Dadurch soll ein Eintreten des Mediums in den

Überwachungsraum und ein Eindringen in die Überwachungsapparatur und ggf. ein unkontrolliertes Austreten des geförderten Mediums an diesem Ende vermieden werden. Bei Tankstellen stehen die Förderleitungen im Betriebsfall unter einem Druck vom max. 3 bar. Durch gleichzeitiges Schließen von mehreren Zapfpistolen können aber auch Druckstöße von bis zu 14 bar auftreten. Für diesen Fall müßte der reguläre Überwachungsdruck auf mind. 5 bar, u.U. aber auch auf 16 bar eingestellt sein. Bei dem bekannten Leitungsrohr aus zwei gewellten Metallrohren, von denen das innere darüber hinaus noch eine Armierung trägt, sind diese Drücke nahezu problemlos. Bei Leitungsrohren, deren Innen- und Außenrohre aus einem weniger stabilen Werkstoff, wie z.B. Kunststoff bestehen, würden diese entweder bersten (Außenrohr) oder kollabieren (Innenrohr). Maßnahmen, die mechanische Stabilität des Werkstoffes für das Innen- und Außenrohr zu erhöhen, würden die Kosten erheblich in die Höhe treiben.

Aus der US-A-4,450,711 ist ein Verfahren zur Überwachung einer aus einer Vielzahl von einzelnen Rohrleitungsabschnitten zusammengesetzten Rohrleitung bekannt, wobei jeder Rohrleitungsabschnitt aus einem Innenrohr und einem das Innenrohr unter Bildung eines Ringspaltes umgebenden Außenrohr besteht. In dem Ringspalt wird ein Spülmedium ständig umgewälzt und analysiert. Im Falle eines Schadens am Innen- und/oder Außenrohr wird die Menge des umgewälzten Spülmittels erhöht und das aufgrund eines Schadens in den Ringspalt eingetretene Medium ausgetrieben.

Der vorliegenden Erfindung liegt die Aufgabe zugrunde, das eingangs erwähnte Verfahren zur Überwachung einer Rohrleitung zum Transport petrochemischer Flüssigkeiten oder Gase anzugeben, welches jederzeit eine Überprüfung der Schutzwirkung des Außenrohres zuverlässig meldet, ein unkontrolliertes Austreten des geförderten Mediums ausschließt, die Bildung zündfähiger Gemische im Überwachungsraum unterbindet sowie ein Ansaugen und Weiterleiten dieser zündfähigen Gemische gänzlich vermeidet. Darüberhinaus soll das Verfahren insbesondere für Rohrkomponenten aus Werkstoffen geringer Festigkeit wie z.B. Kunststoffrohre anwendbar sein.

Diese Aufgabe wird durch die im Kennzeichen der Ansprüche 1 und 5 erfaßten Merkmale gelöst.

Durch die ständige Überwachung des Druckes im Überwachungsraum zwischen Innen- und Außenrohr der einzelnen Rohrleitungsstränge des Leitungsnetzes können sowohl Schäden am Innen- als auch am Außenrohr für jeden Rohrleitungsstrang gesondert gemeldet werden. Kleine Schäden am Innenrohr sind mit dieser Methode unter Umständen nicht feststellbar. Das Umwälzen des Gases im Überwachungsraum und das Vorbeileiten des Gases an Sonden meldet sicher einen Schadensfall am Innenrohr.

Während der Überwachungsraum ständig drucküberwacht wird, mit Ausnahme der Zeit, wo das Gas umgewälzt wird, wird die zweite Maßnahme - das Überprüfen mittels der Sensoren nur in bestimmten Zeiträumen, z.B. alle 60 Minuten durchgeführt.Wird ein Schadensfall gemeldet, wird in jedem Fall die Anlage abgeschaltet.

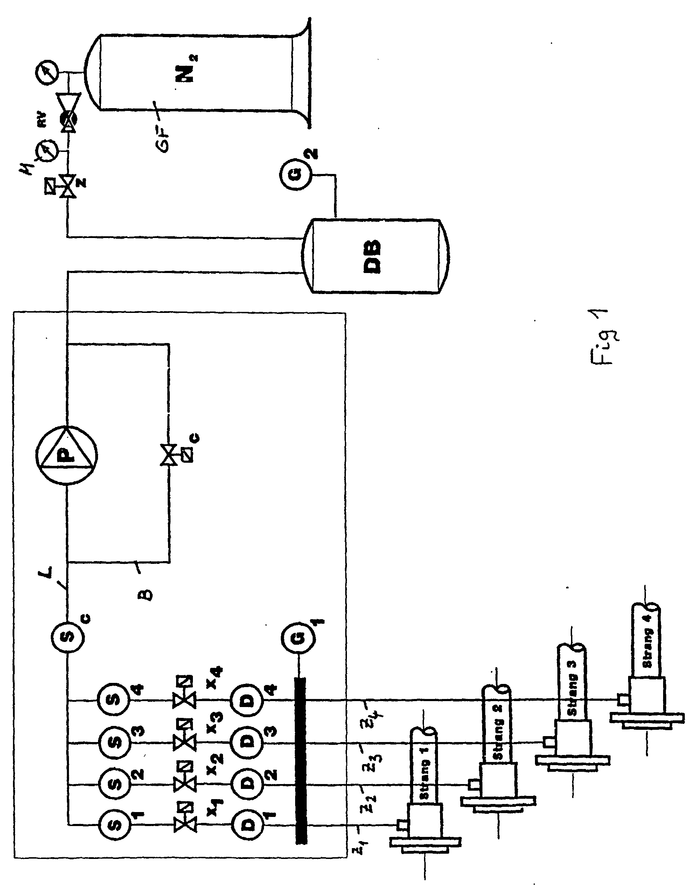

Die Erfindung ist anhand der in den Figuren 1 bis 3 schematisch dargestellten Ausführungsbeispiele näher erläutert.

In der Figur 1 ist das Schema der Überwachungsanlage für eine aus Strang 1, Strang 2, Strang 3 und Strang 4 bestehende Anlage zum Fördern von petrochemischen Flüssigkeiten, z.B. eine Tankstelle dargestellt. Das jeden Strang bildende Leitungsrohr besteht aus einem Innenrohr, einem Außenrohr und einem Überwachungsraum.

Der Überwachungsraum jedes Stranges ist über eine Zuführungsleitung Z₁, Z₂, Z₃, Z₄ sowie eine Leitung L mit einem Druckerzeuger GF verbunden. In dem Ausführungsbeispiel ist der Druckerzeuger GF eine mit Stickstoff gefüllte Gasflasche. An die Stelle der Gasflasche kann jedoch auch eine übliche Pumpe treten. Mit einem Reduzierventil RV kann der Überwachungsdruck exakt eingestellt werden und an einem Manometer M abgelesen werden. Solche Anlagen sind an sich bekannt und eignen sich für die ständige Drucküberwachung des Überwachungsraums von überwachbaren Leitungsrohren.

In den Zuleitungen Z₁, Z₂, Z₃, und Z₄ sind Druckwächter D₁, D₂, D₃ und D₄, Magnetventile X₁, X₂, X₃ und X₄ sowie Sensoren S₁, S₂, S₃ und S₄ vorgesehen. Darüber hinaus ist in der Leitung L ein weiterer Sensor S_{c} vorgesehen. In der Leitung L befinden sich ferner eine Gaspumpe P, ein Druckbehälter DB sowie ein weiteres Magnetventil Z. In einer Bypassleitung B ist ein weiteres Magnetventil C befindlich.

Bei den Sensoren S₁, S₂, S₃, S₄ und S_{c} handelt es sich um Sensoren, die das Vorhandensein von Kohlenwasserstoffen feststellen und weitergeben.

Um das Innenrohr auf Leckagen zu überprüfen, werden periodisch alle Magnetventile X₁, X₂, X₃ und X₄ mit Ausnahme des Magnetventils, welches in der Zuleitung zu dem zu überprüfenden Strang liegt, kurzzeitig geschlossen. Gleichzeitig läuft die Gaspumpe P für eine bestimmte kurze Zeit. Die Anlage muß so geschaltet sein, daß in diesem Zeitraum die Alarmfunktion der entsprechenden Druckwächter D₁, D₂, D₃ oder D₄ deaktiviert ist. Das geförderte Gas des Überwachungsraumes - in der Regel wird Stickstoff bevorzugt - wird im Druckbehälter DB komprimiert, wobei ein Grenzwertgeber G2 durch Abschalten der Gaspumpe P den maximalen Kompressionsdruck im Druckbehälter DB begrenzt. Der max. Kompressionsdruck wird in Abhängigkeit von der Größe des Druckbehälters DB, des Volumens des Überwachungsraumes der Höhe des Überwachungsdruckes etc. optimiert. Der Abschaltzeitpunkt für die Gaspumpe P ist spätestens dann erreicht, wenn der Druck, gemessen am Grenzwertgeber G1 auf einen Wert von 0,2 bar über Atmosphärendruck gefallen ist. Tritt kein Alarmereignis ein, wird auf gleiche Weise jeder weitere Strang geprüft. Auf diese Weise kann ermittelt werden, welcher Strang schadhaft ist.

Nach Abschluß der jeweiligen Prüfungen öffnet das ansonsten geschlossene Magnetventil C in der Bypassleitung B, um den Druckausgleich zwischen den Druckbehälter DB und dem jeweils überprüften Strang zu ermöglichen. Bis zum erfolgten Druckausgleich (Schaltung z. B. über Zeitvorgabe) bleibt die Gaspumpe P und die Alarmfunktion des jeweiligen Druckwächters D₁, D₂, D₃ oder D₄ deaktiviert. Erst danach soll bei Druckabfall im Strang ein Alarm ausgelöst werden können. Für kleinere Anlagen, wo die Größe des Druckbehälters DB kein Problem darstellt, könnte der Überwachungsmodus auf alle Stränge gleichzeitig - anstatt einzeln - ausgedehnt werden.

Während des Pumpvorgangs wird ein Teil des in dem Überwachungsraum befindlichen Gases durch die Zuleitungen Z₁, Z₂, Z₃ und Z₄ an den Sensoren S₁, S₂, S₃ und S₄ vorbeigeleitet. Ist dieses Gas kohlenwasserstoffhaltig, spricht der entsprechende Sensor an, und es kann festgestellt werden, daß in dem entsprechenden Strang ein Innenrohrschaden vorliegt. In diesem Fall muß die Anlage abgestellt werden bzw. der fehlerhafte Strang außer Betrieb genommen werden. Tritt keine Schadensmeldung auf, wird das Magnetventil C wieder geschlossen und der Drucküberwachungszyklus wird wieder eingestellt, d.h. bei geöffneten Magnetventilen X₁ bis X₄ der Überwachungsdruck in der Leitung L, den Zuleitungen Z₁ bis Z₄ sowie in dem Überwachungsraum der Stränge 1 bis 4 durch Druckausgleich wieder auf. Der Sensor S_{c} ist für den Fall erforderlich, daß einer der Sensoren S₁ bis S₄ ausfällt.

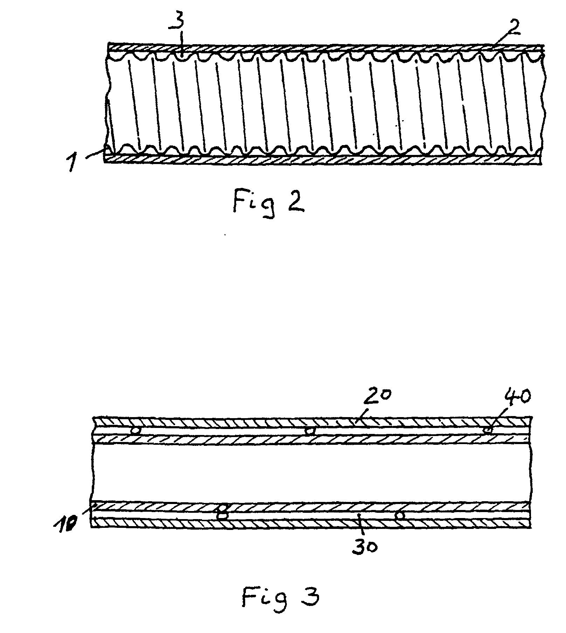

In den Figuren 2 und 3 sind Leitungsrohre im seitlichen Schnitt dargestellt, für welche das erfindungsgemäße Verfahren besonders geeignet ist.

In Figur 2 ist ein Innenrohr 1, welches aus einem gewellten Metallrohr besteht, von einem Außenrohr 2 aus einem extrudierten Kunststoffrohr umgeben. Der Überwachungsraum 3 verläuft hier in Form einer Schraubenlinie zwischen Innenrohr 1 und Außenrohr 2. Zwischen dem Innenrohr 1 und dem Außenrohr 2 kann eine nicht dargestellte Metallfolie vorgesehen sein, die über eine Copolymerschicht mit dem Außenrohr 2 bei dessen Extrusion verklebt. Diese Metallfolie erhöht die Druckbeständigkeit des Außenrohr 2 und verhindert eine Diffusion von Gas durch das Kunststoffrohr.

Handelt es sich bei dem Innenrohr 1 um ein ringförmig gewelltes Metallrohr, sollte das Außenrohr 2 an seiner Innenseite eine Profilierung aufweisen, um einen durchgehenden Überwachungsraum 3 zu gewährleisten.

In Figur 3 besteht sowohl das Innenrohr 10 als auch das Außenrohr 20 aus extrudierten Kunststoffrohren, die durch einen wendelartigen Abstandshalter 40 konzentrisch zueinander gehalten sind, und dadurch den Überwachungsraum 30 zwischen sich herstellen.

Auch bei dieser Rohrkonstruktion kann es vorteilhaft sein, nicht dargestellte Metallfolien im Aufbau sowohl des Innenrohres 10 als auch das Außenrohres 20 vorzusehen.

Der Abstandshalter 40 kann entfallen, wenn das Innenrohr 10 und/oder das Außenrohr 20 an seiner dem benachbarten Rohr zugekehrten Oberfläche eine Profilierung z. B. in Form von Längsrippen aufweist.

## Patentansprüche

1. Verfahren zur Überwachung eines aus mehreren Rohrleitungen (Stränge 1 bis 4) bestehenden Leitungsnetzes zum Transport petrochemischer Flüssigkeiten oder Gase wie beispielsweise Benzin, wobei die zwischen einem die petrochemische Flüssigkeit bzw. das Gas führenden Innenrohr (1) und einem das Innenrohr (1) mit Abstand umgebenden Außenrohr (2) befindliche Spalte (3) drucküberwachbar sind, **dadurch gekennzeichnet, daß** die Spalte (3) mit gasförmigem Medium vorzugsweise einem inerten Gas wie Stickstoff unter einem Überdruck von 0,1 bis 17,0 bar, vorzugsweise 0,3 bis 1,0 bar ausgefüllt sind und der Druck ständig überwacht wird, daß in periodischen Abständen das Gas in den Spalten (3) umgewälzt und an Sonden (S1 bis S4) vorbeigeleitet wird, die verdampfte petrochemische Flüssigkeit melden und daß während der Umwälzung des Gases die Drucküberwachung deaktiviert wird.

2. Verfahren nach Anspruch 1 oder 2, **dadurch gekennzeichnet, daß** das Innenrohr (1) ein längsnahtgeschweißtes schraubenlinienförmig gewelltes Metallrohr und das Außenrohr (2) ein auf den Wellenkuppen des Innenrohres (1) aufliegendes Kunststoffrohr ist und der Spalt (3) durch den schraubenlinienförmig verlaufenden Kanal zwischen dem gewellten Metallrohr und dem Kunststoffrohr (2)gebildet wird.

3. Verfahren nach Anspruch 1 **dadurch gekennzeichnet, daß** das Innenrohr (1) ein Kunststoffrohr ist und das Außenrohr (2) ein schraubenlinienförmig gewelltes Kunststoffrohr ist, daß das Außenrohr (2) mit seiner Wellung auf dem Innenrohr (1) aufsitzt und daß der Spalt (3)durch den schraubenlinienförmig verlaufenden Kanal zwischen Innenund Außenrohr gebildet wird.

4. Verfahren nach Anspruch 3, **dadurch gekennzeichnet, daß** zumindest das Innenrohr (1) eine für petrochemische Flüssigkeiten oder Gase undurchlässige Schicht aufweist.

5. Vorrichtung zur Überwachung eines aus mehreren Rohrleitungen (Stränge 1 bis 4) bestehenden Leitungsnetzes zum Transport petrochemischer Flüssigkeiten oder Gase wie beispielsweise Benzin, wobei die zwischen einem die petrochemische Flüssigkeit bzw. das Gas führenden Innenrohr (1) und einem das Innenrohr (1) mit Abstand umgebenden Außenrohr (2) befindliche Spalte (3) drucküberwachbar sind, **gekennzeichnet durch**
a) Druckwächter (D₁, D₂, D₃, D₄) die mit den Spalten (3, 30) pneumatisch verbunden sind,
b) mit den Druckwächtern über Leitungen verbundene Sensoren (S₁, S₂, S₃, S₄, S_{c}) für petrochemische Gase oder Flüssigkeiten,
c) eine über Leitungen mit den Sensoren (S₁, S₂, S₃, S₄, S_{c}) verbundene Gaspumpe (P),
d) einen Druckbehälter (DB) sowie
e) einen Vorratsbehälter (GF) für ein inertes Gas oder Gasgemisch, wobei die Gaspumpe (P), der Druckbehälter (DB) und der Vorratsbehälter (GF) über Leitungen verbunden sind.

6. Vorrichtung nach Anspruch 5, **dadurch gekennzeichnet, daß** zwischen dem Vorratsbehälter (GF) bzw. der Luftpumpe und dem Druckbehälter (DB) ein Reduzierventil (RV) mit Manometer (M) sowie ein Magnetenventil (Z) vorgesehen sind.

7. Vorrichtung nach Anspruch 5 oder 6, **dadurch gekennzeichnet, daß** die Gaspumpe (P) zwischen dem Druckbehälter (DB) und den Rohrleitungen (Strang 1 bis Strang 4) vorgesehen ist.

8. Vorrichtung nach einem der Ansprüche 5 bis 7, **dadurch gekennzeichnet, daß** die Gaspumpe (P) von einem Bypass (B) umgangen ist, in welchem ein Magnetventil (c) befindlich ist.

9. Vorrichtung nach einem der Ansprüche 5 bis 8, **dadurch gekennzeichnet, daß** zwischen den Druckwächtern (D₁ bis D₄) und den Sensoren (S₁ bis S_{c}) jeweils ein Magnetventil (X₁ bis X₄) vorgesehen ist.

## Claims

1. A method for controlling a network comprising several pipelines (lines 1 through 4) for transporting petrochemical liquids or gases such as gasoline for example, wherein the gap (3) located between an interior pipe (1) that carries the petrochemical liquid or gas and an exterior pipe (2) that surrounds the interior pipe (1), providing a clearance, can be pressure monitored, **characterized in that** the gaps (3) are filled with a gaseous medium, preferably an inert gas such as nitrogen under a pressure burden of 0.1 to 17.0 bar, preferably 0.3 to 1.0 bar and the pressure is constantly monitored such that the gas is circulated at periodic intervals in the gaps (3) and led past sensors (S1 through S4) that report vaporized petrochemical liquid and that the pressure control is deactivated during circulation of the gas.

2. A method according to claims 1 or 2, **characterized in that** the interior pipe (1) is a corrugated metal pipe designed as a lengthwise welded helical line and the exterior pipe (2) is a plastic pipe that rests on the summits of the corrugation ripples of the interior pipe (1) and the gap (3) is formed by the duct running as a lengthwise helix between the corrugated metal pipe and the plastic pipe (2).

3. A method according to claim 1, **characterized in that** the interior pipe (1) is a plastic pipe and the exterior pipe (2) is a corrugated plastic pipe that forms a linear helix, that the exterior pipe (2) with its ripples rests on the interior pipe (1) and that the gap (3) is formed by the duct running as a lengthwise helix between the interior and exterior pipes.

4. A method according to claim 3, **characterized in that** at least the interior pipe (1) provides a coating that is impermeable to petrochemical liquids or gases.

5. A device for controlling a network comprising several pipelines (lines 1 through 4) for transporting petrochemical liquids or gases such as gasoline for example, wherein the gap (3) located between interior pipe (1) which carriers the petrochemical liquid or gas and an exterior pipe (2) that surrounds the interior pipe (1), providing a clearance, can be pressure controlled, **characterized by**
a) pressure monitors (D₁, D₂, D₃, D₄) that are pneumatically connected to the gaps (3, 30)
b) sensors (S₁, S₂, S₃, S₄, S_{c}) for petrochemical gases or liquids that are connected to the pressure monitors via lines,
c) a gas pump (P) connected via lines to the sensors ((S₁, S₂, S₃, S₄, S_{c}),
d) a pressure tank (DB) as well as
e) a supply tank (GF) for an inert gas or gas mixture, wherein the gas pump (P), the pressure tank (DB) and the supply tank (GF) are connected via lines.

6. A device according to claim 5, **characterized in that** a reducing valve (RV) with manometers (M) as well as a magnet valve (Z) are provided between the supply tank (GF) or the air pump respectively and the pressure tank (DB).

7. A device according to claims 5 or 6, **characterized in that** the gas pump (P) is provided between the pressure tank (DB) and the pipelines (line 1 through line 4).

8. A device according to one of claims 5 through 7, **characterized in that** a bypass (B), in which a magnet valve (c) is located, circumvents the gas pump (P).

9. A device according to one of claims 5 through 8, **characterized in that** magnet valves (X₁ through X₄) are provided between each of the pressure monitors (D₁ through D₄) and the sensors (S₁ through S_{c}).

## Revendications

1. Processus de surveillance d'un réseau de conduites composé de plusieurs tuyaux (lignes 1 à 4) et destiné au transport de liquides ou de gaz pétrochimiques, comme par exemple de l'essence, et où la pression dans un espace intermédiaire (3) situé entre un tuyau interne (1) conduisant le liquide ou le gaz pétrochimique et un tuyau externe entourant le tuyau interne (1) est contrôlable; l'invention est **caractérisée par le fait que** l'espace intermédiaire (3) est rempli d'une substance gazeuse, de préférence un gaz inerte comme par exemple de l'azote sous une surpression de 0,1 à 17,0 bars, de préférence 0,3 à 1,0 bars, et dont la pression est surveillée en permanence, que le gaz circule intervalles réguliers dans les espaces intermédiaires (3) et se trouve guidé vers des capteurs (S1 à S4) qui signalent la présence de vapeurs de liquide pétrochimique et que pendant le brassage du gaz, le contrôle de pression est interrompu.

2. Processus conforme aux revendications 1 ou 2, et **caractérisé par le fait que** le tuyau interne (1) est constitué d'un tube métallique à soudure longitudinale et ondulation hélicoïdale et le tuyau externe (2) d'un tube en matière synthétique reposant sur les ondulations du tuyau interne (1), et que l'espace intermédiaire (3) est constitué par le canal hélicoïdal créé entre le tube métallique ondulé et le tube en matière synthétique (2).

3. Processus conforme à la revendication 1, et **caractérisé par le fait que** le tuyau interne (1) est en matière synthétique et que tuyau externe (2) est un tube en matière synthétique à ondulation hélicoïdale, que les ondulations hélicoïdales du tube (2) reposent sur le tuyau interne (1) et que l'espace intermédiaire (3) est constitué du canal hélicoïdal créé entre les tuyaux interne et externe.

4. Processus conforme à la revendication 3, et **caractérisé par le fait que** le tuyau interne (1) au moins, possède une couche protectrice étanche aux liquides ou aux gaz pétrochimiques.

5. Dispositif de surveillance d'un réseau de conduites composé de plusieurs tuyaux (lignes 1 à 4) et destiné au transport de liquides ou de gaz pétrochimiques, comme par exemple de l'essence, et où la pression dans un espace intermédiaire (3) situé entre un tuyau interne (1) conduisant le liquide ou le gaz pétrochimique et un tuyau externe entourant le tuyau interne (1) est contrôlable, et **caractérisé par**
a) des manostats (D₁, D₂, D₃, D₄) en liaison pneumatique avec les espaces intermédiaires (3, 30),
b) des capteurs (S₁, S₂, S₃, S₄, S_{c}) pour des liquides ou des gaz pétrochimiques, reliés aux manostats via des conduites,
c) à une pompe à gaz (P) reliée avec les capteurs (S₁, S₂, S₃, S₄, S_{c}) via des conduites,
d) un réservoir de pression (DB), ainsi
e) qu'un récipient de réserve (GF) prévu pour un gaz inerte ou un mélange gazeux, et où la pompe à gaz (P), le réservoir de pression (DB) et le récipient de réserve (GF) sont reliés par des conduites.

6. Dispositif conforme à la revendication 5, et **caractérisé par le fait qu'**il est prévu d'installer une soupape de réduction de pression (RV) avec manomètre (M) et une soupape magnétique (Z) entre le récipient de réserve (GF) ou la pompe à air et le réservoir de pression (DB).

7. Dispositif conforme à l'une des revendications 5 ou 6, et **caractérisé par le fait que** la pompe à gaz (P) est située entre le réservoir de pression (DB) et les conduites de tuyaux (ligne 1 à ligne 4).

8. Dispositif conforme à l'une des revendications 5 à 7, et **caractérisé par le fait que** la pompe à gaz (P) est dérivée à l'aide d'un by-pass (B) dans lequel se trouve une soupape magnétique (C).

9. Dispositif conforme à l'une des revendications 5 à 8, et **caractérisé par le fait qu'**il est prévu d'installer une soupape magnétique (X1 à X4) entre chaque manostats (D₁ à D₄) et chaque capteur (S₁ à S_{c}).
